# EUROPÄISCHE PATENTANMELDUNG

(11) **EP 3 333 818 A1**
(43) Veröffentlichungstag der Anmeldung: **13.06.2018**
(21) Anmeldenummer: 17205142.7
(22) Anmeldetag: 04.12.2017
(51) Int. Cl.: G08C 17/00, H04N 21/482, G06F 17/30, H04N 21/422

(54) **NATÜRLICHER SPRACHDIALOG**

(30) Priorität: 06.12.2016 DE 102016123547
(71) Anmelder: fm marketing gmbh, 5202 Neumarkt am Wallersee (AT)
(72) Erfinder: Bernhaupt, Regina, 5023 Salzburg (AT)
(74) Vertreter: von Bülow & Tamada

(57) **Zusammenfassung**

Die Erfindung betrifft ein Verfahren zum Steuern eines Multimediagerätes während eines Menüaufbaus, der durch einen Benutzer basierend auf einer Datenbankabfrage mit einer Fernbedienung zur Steuerung des Multimediageräts inittiert wird, umfassend:
- Erfassen der Datenbankabfrage durch eine Eingabe des Benutzers auf der Fernbedienung;
- Absenden der Datenbankanfrage an eine Datenbank;
- Empfangen einer Antwort auf die Datenbankanfrage von der Datenbank nach einer Verarbeitungszeit;
- Abspielen einer akustischen Wiedergabe auf dem Multimediagerät während der Verarbeitungszeit, und
- Aufbauen des Menüs basierend auf der Antwort auf die Datenbankanfrage.

## Beschreibung

Die vorliegende Erfindung betrifft ein Verfahren zum Steuern eines Multimediagerätes, eine Steuervorrichtung zur Durchführung des Verfahrens, ein Multimediasystem mit der Steuervorrichtung und ein Computerprogrammprodukt.

Aus der EP 2 141 674 A1 ist eine Fernbedienung bekannt, mit der sich ein Multimediagerät mittels Spracheingabe steuern lässt.

Es ist Aufgabe der vorliegenden Erfindung, das bekannte Verfahren zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung, umfasst ein Verfahren zum Steuern eines Multimediagerätes während eines Menüaufbaus, der durch einen Benutzer basierend auf einer Datenbankabfrage mit einer Fernbedienung zur Steuerung des Multimediageräts initiiert wird, die Schritte Erfassen der Datenbankabfrage durch eine Eingabe des Benutzers auf der Fernbedienung, Absenden der Datenbankanfrage an eine Datenbank, Empfangen einer Antwort auf die Datenbankanfrage von der Datenbank nach einer Verarbeitungszeit, Abspielen einer akustischen Wiedergabe auf dem Multimediagerät während der Verarbeitungszeit und Aufbauen des Menüs basierend auf der Antwort auf die Datenbankanfrage.

Dem angegebenen Verfahren liegt die Überlegung zugrunde, dass eine Datenbankabfrage abhängig von der Datenbankgröße und der zur Verfügung stehenden Kanalkapazität sehr zeitintensiv sein kann. Wird also ein Menü in Abhängigkeit einer Datenbankabfrage aufgebaut, so kann es sein, dass der Benutzer vergleichsweise lange warten muss, bis er auf dem Bildschirm ein Ergebnis sieht. Auf der anderen Seite stehen dem Benutzer durch fortschrittliche Eingabeschnittstellen Verfahren zur Verfügung, mit denen er sehr schnell eine Datenabfrage in das Multimediasystem eingeben kann. Eines dieser Verfahren ist eine per Sprache eingegebene Datenbankabfrage, die mittels Spracherkennung verarbeitet wird. Die Eingabe der Datenbankabfrage wird daher beschleunigt, während der Reaktionsgeschwindigkeit des Multimediasystems und der damit verbundene Menüaufbau auf die Datenbankabfrage allerdings technisch Grenzen gesetzt sind. Dies kann zu einer Diskrepanz zwischen der Erwartungshaltung des Benutzers auf seine Datenbankeingabe und den technischen Möglichkeiten des Multimediasystems führen. Hier greift die Erfindung mit dem Vorschlag an, insbesondere im Falle einer Datenbankabfrage per Sprache die Zeit bis zum Erhalt einer Antwort auf die den Menüaufbau ermöglichenden Datenbankabfrage mit einer akustischen Wiedergabe auf dem Multimediagerät zu überbrücken. Auf diese Weise wird die Erwartung des Benutzers, dass sich als Antwort auf seine Datenbankabfrage das Menü aufbaut, subjektiv entschleunigt, weil das Multimediasystem mit ihm über einen Dialog kommuniziert.

In einer Weiterbildung des angegebenen Verfahrens wird ein den Benutzer identifizierendes Merkmal bestimmt, wobei die akustische Wiedergabe von diesem den Benutzer identifizierenden Merkmal abhängig ist. Hierzu kann der Benutzer beispielsweise direkt mit seinem Namen angesprochen werden oder die akustische Wiedergabe kann in Abhängigkeit eines Gemütszustandes des Benutzers erfolgen. Identifiziert werden kann das Merkmal dabei auf jede beliebige Weise. So kann das Merkmal direkt dadurch identifiziert werden, dass sich der Benutzer aktiv an der Fernbedienung durch Einloggen oder dergleichen zu erkennen gibt. Es kann aber auch indirekt auf den Benutzer oder auf den Benutzer kennzeichnete Merkmale mittels einer geeigneten Sensorik geschlossen werden.

In einer anderen Weiterbildung des angegebenen Verfahrens wird zunächst die akustische Wiedergabe beendet, bevor die Antwort auf die Datenbankabfrage verarbeitet und/oder das Menü aufgebaut wird.

In einer besonderen Weiterbildung des angegebenen Verfahrens umfasst die Datenbankabfrage vom Benutzer einen per Sprache erteilten Befehl, der mittels Spracherkennung erkannt wird. Auf diese Weise kann auch eine sehr umfangreiche Datenbankabfrage in sehr kurzer Zeit definiert werden, weil der Benutzer die Datenbankabfrage nicht über eine Tastatur aufwändig tippen muss.

Hierbei kann das den Benutzer identifizierende Merkmal basierend der Sprache des Benutzers bestimmt werden, mit der der Benutzer den Befehl erteilt. Über die Sprache des Benutzers lassen sich ohne zusätzliche Sensoren zahlreiche Informationen über diesen sammeln. Alternativ oder zusätzlich kann das den Benutzer identifizierende Merkmal auch basierend auf dem Signal eines Sensors bestimmt werden.

In einer noch anderen Weiterbildung des angegebenen Verfahrens kann eine Kennung des Benutzers nach der Bestimmung des ihn identifzierenden Merkmals in einem Speicher hinterlegt werden. Auf diese Weise steht die Information über den Benutzer in der Fernbedienung bei der nächsten Wiederverwendung zumindest als Referenz zur Verfügung, so dass der Benutzer einfacher und schneller wieder identifiziert werden kann.

Die akustische Wiedergabe kann ferner auch in Abhängigkeit der Kennung des Benutzers ausgegeben werden.

Gemäß einem weiteren Aspekt der Erfindung ist eine Steuervorrichtung eingerichtet, um eines der angegebenen Verfahren durchzuführen.

In einer Weiterbildung der angegebenen Vorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte des angegebenen Verfahrens durchzuführen, wenn das Computerprogramm auf einem elektronischen Gerät oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, das angegebene Verfahren durchführt.

Gemäß einem weiteren Aspekt der Erfindung umfasst ein Multimediasystem eine Fernbedienung mit einer Eingabeschnittstelle zur Eingabe eines Steuerbefehls per Sprache und einer Übertragungsschnittstelle zum Versenden des eingegebenen Steuerbefehls, ein Multimediagerät mit einer Empfangsschnittstelle zum Empfangen des versendeten Steuerbefehls, und eine der angegebenen Steuervorrichtungen zum Steuern des Multimediagerätes.

Die oben beschriebenen Eigenschaften, Merkmale und Vorteile dieser Erfindung sowie die Art und Weise, wie diese erreicht werden, werden verständlicher im Zusammenhang mit der folgenden Beschreibung der Ausführungsbeispiele, die im Zusammenhang mit der Zeichnung näher erläutert werden. Es zeigen:
- Fig. 1: eine Prinzipdarstellung eines Systems aus einem Multimediagerät und einer Fernbedienung,
- Fig. 2: ein Zeitstrahl mit einer akustischen Wiedergabe gemäß einem Ausführungsbeispiel, und
- Fig. 3: ein Zeitstrahl mit einer akustischen Wiedergabe gemäß einem weiteren Ausführungsbeispiel.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

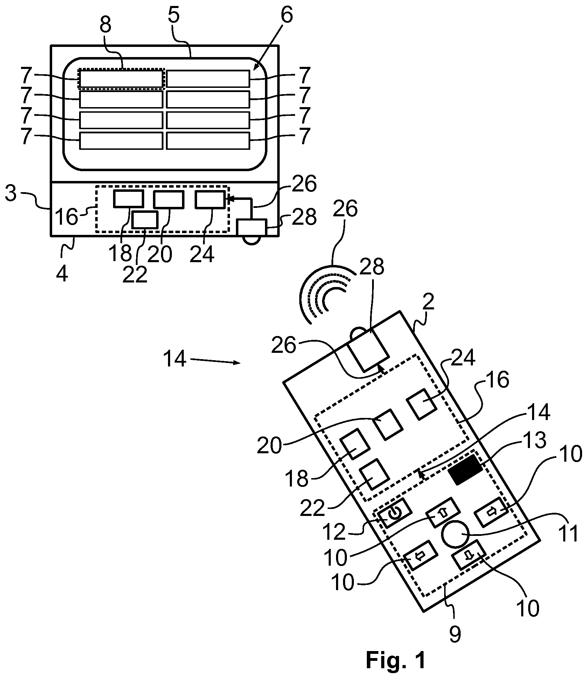

Es wird auf Fig. 1 Bezug genommen, die eine Fernbedienung 2 zum Steuern eines ebenfalls abgebildeten Multimediagerätes 4 in Form eines Bildschirmes 5 mit einer daran angeschlossenen SetTopBox 3 zeigt.

Auf dem Bildschirm 5 ist ein Menü 6 mit mehreren Menüpunkten 7 zu sehen. Ein Fokuselement 8 kann mit der Fernbedienung 2 in einer noch zu beschreibenden Weise über die einzelnen Menüpunkte 7 bewegt werden.

Die Fernbedienung 2 umfasst eine Eingabeschnittstelle 9, auf der ein Steuerkreuz mit Richtungstasten 10 und einer Auswahltaste 11, sowie eine Einschalttaste 12 und ein Mikrophon 13 angeordnet sind. Mit den Richtungstasten 10 des Steuerkreuzes kann das Fokuselement 8 zwischen den Menüpunkten 7 bewegt werden. Mit der Auswahltaste 11 kann der Menüpunkt 7 aktiviert werden, auf dem sich das Fokuselement 8 beim Drücken der Auswahltaste 11 befindet. Mit der Einschalttaste 12 kann das Multimediagerät 4 aktiviert und deaktiviert werden. Schließlich können über das Mikrophon 13 Sprachbefehle in die Fernbedienung eingegeben werden. Um das Gesamtsystem aus der Fernbedienung 2 und dem Multimediagerät 4 für die Eingabe von Sprachbefehlen zu aktivieren, könnte eine Taste auf der Fernbedienung 2, wie beispielsweise die Auswahltaste 11, gedrückt werden.

Jeder Menüpunkt 7 steht für einen Medieninhalt, der auf dem Multimediagerät 4 abgespielt werden kann. Unter Medieninhalten fallen Quellen mit Audio/VideoDaten, die von der SetTopBox 3 auf dem Bildschirm 5 dargestellt werden können. Das können beispielsweise Rundfunkkanäle, Datenstreams aus dem Internet, Filme oder dergleichen sein. Wird ein bestimmter Menüpunkt 7 mit den Richtungstasten 10 angefahren und mit der Auswahltaste 11 aktiviert, dann stellt die SetTopBox 3 den hinter diesem Menüpunkt 7 stehenden Medieninhalt auf dem Bildschirm 5 dar.

Das Menü 6 mit seinen Menüpunkten 7 ist adaptiv derart ausgeführt, dass die hinter den Menüpunkten 7 stehenden Medieninhalte abhängig von einer Datenbankabfrage mit einem Suchbefehl und Eingabedaten ist, die von einem Benutzer per Sprache in das Mikrophon 13 eingegeben wird. Basierend auf dem Suchbefehl verarbeitet dann die SetTopBox 3 die Eingabedaten zu Ausgabedaten und stellt das Menü 6 mit seinen Menüpunkten 7 in Abhängigkeit der Ausgabedaten dar. In dem konkreten Beispiel löst der Benutzer mit dem Suchbefehl eine Suche in einer Datenbank aus, und lässt sich als Menüpunkte 7 alle verfügbaren Filme zu einem gewünschten Themengebiet anzeigen. Dann kann der Benutzer mittels den Richtungstasten 10 einen Menüpunkt 7 und damit einen der mit der Suche gefundenen Filme anwählen und durch Drücken der Auswahltaste 11 zum Abspielen auf dem Bildschirm 5 starten.

Die Datenbankabfrage mit dem Suchbefehl und den Eingabedaten wird als Sprache über das Mikrophon 13 auf der Fernbedienung 2 erfasst und von der SetTopBox 3 verarbeitet. Hierzu werden vom Mikrophon 13 detektierte Sprachdaten 14 mit der Datenbankabfrage in der Fernbedienung 2 an eine Steuervorrichtung 16, auch Signalverarbeitungseinrichtung genannt, übergeben. Die Steuervorrichtung 16 in der Fernbedienung 2 umfasst einen Speicher 18, in dem ein oder mehrere Computerprogramme hinterlegt sind, sowie einen oder mehrere kommunizierende Prozessoren 20, welche das oder die Computerprogramme aus dem Speicher 18 abrufen und ausführen. Die Steuervorrichtung 16 kann optional eine Kommunikationsschnittstelle 22 besitzen, um das oder die Computerprogramme im Speicher 18 zu aktualisieren und/oder zu installieren. Schließlich umfasst die Steuervorrichtung 16 noch wenigstens einen Modulationsschaltkreis 24, ein geeignetes Trägersignal 26 zu generieren, auf dem Daten an die SetTopBox 3 des Multimediagerätes 4 übertragen werden können. Der grundsätzliche Aufbau der Steuervorrichtungen 16 ist einschlägig bekannt und soll nachstehend nicht weiter erläutert werden.

Die Sprachdaten 14 mit der Datenbankanfrage werden vom Computerprogramm in dem Prozessor 20 verarbeitet und für die Übertragung vorbereitet. Hierzu kann das Computerprogramm bereits die Datenbankanfrage aus den Sprachdaten 14 per Spracherkennung erkennen. Alternativ kann das Computerprogramm die Sprachdaten 14 auch an ein externes Spracherkennungsprogramm versenden, das an einem beliebigen Ort auf der Fernbedienung oder irgendwo im Netzwerk vorhanden ist, und von diesem externen Spracherkennungsprogramm die erkannte Datenbankabfrage erhalten. In der vorliegenden Ausführung soll jedoch davon ausgegangen werden, dass diese Spracherkennung erst in der SetTopBox 3 stattfindet. Das Computerprogramm in dem Prozessor 20 bereitet die Sprachdaten 14 durch eine geeignete Codierung auf und macht sie so robust gegen Übertragungsfehler. Dies ist ein an sich bekannter Vorgang. Die codierten Sprachdaten 14 werden dann im Modulationsschaltkreis 24 auf das Trägersignal 26 aufgespielt und mit einer Übertragungsschnittstelle 28 an die SetTopBox 3 übertragen. Die Übertragungsschnittstelle 28 kann beliebig ausgeführt sein. Möglich wäre sie als Infrarot-, als Bluetooth- und/oder als drahtlose Netzwerkübertragungsschnittstelle auszuführen.

Die auf dem Trägersignal 26 modulierten und codierten Sprachdaten 14 werden in der SetTopBox 3 von einer Übertragungsschnittstelle 28 empfangen und an eine Steuervorrichtung 16 übergeben. In der Steuervorrichtung 16 der SetTopBox 3 wird zunächst in einem Modulationsschaltkreis 24 die Modulation der Sprachdaten 14 auf das Trägersignal 26 rückgängig gemacht und dann an einen Prozessor 20 übergeben. Auch in dem Prozessor 20 wird ein in einem Speicher 18 hinterlegtes Computerprogramm ausgeführt, das die demodulierten Sprachdaten 18 in der SetTopBox 3 verarbeitet. Hierzu wird zunächst die Codierung der Sprachdaten 14 aus der Steuervorrichtung 16 in der Fernbedienung 2 rückgängig gemacht.

Im Anschluss an die Decodierung erkennt das Computerprogramm in der SetTopBox 3 aus den decodierten Sprachdaten 14 die per Sprache in das Mikrophon 13 gesprochene Datenbankabfrage des Benutzers und führt die Datenbankabfrage anschließend aus. Die der Datenbankabfrage zugrundeliegende Datenbank mit den oben genannten Medieninhalten kann an einem beliebigen Ort liegen, so beispielsweise in der SetTopBox 3 selbst, im Internet oder auch an einem beliebigen anderen Ort, der beispielsweise über ein nicht weiter dargestelltes Netzwerk an die SetTopBox 3 angeschlossen ist. Als Ergebnis der Datenbankabfrage erhält das Computerprogramm verfügbare Medieninhalte, die dem gewünschten Suchgebiet des Benutzers entsprechen und stellt diese verfügbaren Medieninhalte als die einzelnen Menüpunkte 7 des Menüs 6 auf dem Bildschirm 5 dar.

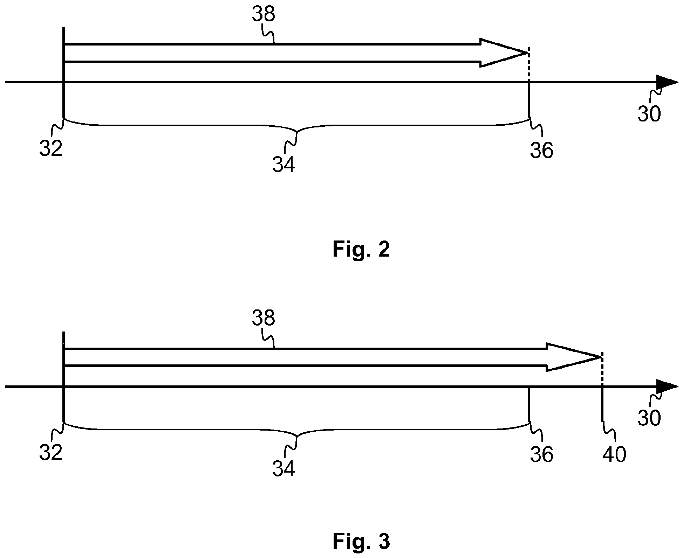

Für das zuvor genannte Verfahren benötigt das zuvor genannte Multimediasystem aus der Fernbedienung 2 und dem Multimediagerät 4 von der Aufnahme der Sprachdaten 14 am Mikrophon 13 bis zur Darstellung des Ergebnisses als Menüpunkte 7 auf dem Menü 6 des Bildschirms 5 eine gewisse Verarbeitungszeit, die anhand von Fig. 2 verdeutlicht werden soll, auf der ein Zeitstrahl 30 abgebildet ist. Gibt der Benutzer die Datenbankabfrage zu einem ersten Zeitpunkt 32 über das Mikrophon 32 ein, so dauert die Übertragung der Sprachdaten 14 von der Fernbedienung 2 zur SetTopBox 3 sowie die Datenbankabfrage in der SetTopBox 3 die zuvor erwähnte Verarbeitungszeit 34, so dass das Menü 6 mit den an die Datenbankabfrage angepassten Menüpunkten 7 zu einem zweiten Zeitpunkt 36 angezeigt wird, die um die Verarbeitungszeit 34 nach dem ersten Zeitpunkt 32 liegt.

Ein Benutzer, der die Datenbankabfrage mit einer Tastatur auf der Fernbedienung 2 definieren würde, würde für die Eingabe entsprechend lang benötigen. Selbst wenn die Datenbankabfrage mehrere zehn Sekunden, oder vielleicht sogar eine Minute dauert, so würde dies dem Benutzer aufgrund der vorangegangen längeren Eingabe der Datenbankabfrage nicht all zu lang vorkommen, weil er aufgrund der lang dauernden Eingabe ohnehin schon viel Zeit benötigt hat. Anders sieht es aus, wenn der Benutzer die Datenbankabfrage per Sprache und damit den Sprachdaten 14 definiert. Hier kann er die Datenbankabfrage in einem sehr kurzen Zeitrahmen definieren und erwartet vom Multimediasystem 4 eine entsprechend schnelle Antwort. Um diese Erwartung des Benutzers zu entschleunigen, wird mit der vorliegenden Ausführung vorgeschlagen, das Multimediasystem mit dem Benutzer nach der Eingabe der Datenbankabfrage und damit während der Verarbeitungszeit 34 auf dem Multimediagerät 4 in einen Dialog treten zu lassen und ihm vom Multimediagerät eine akustische Wiedergabe 38 auszugeben.

Sollte die akustische Wiedergabe 38 länger dauern als die Verarbeitungszeit 34 der Datenbankabfrage, so sollte der Aufbau des Menüs 6 zu einem dritten Zeitpunkt 40 nach dem zweiten Zeitpunkt 36 erfolgen, an dem die akustische Wiedergabe fertig abgespielt ist. Dies ist in Fig. 3 angedeutet.

Anders herum können auch mehrere akustische Wiedergaben 38 aneinander gereiht werden, falls die Verarbeitungszeit 34 länger als eine akustische Wiedergabe 38 dauert. Sollte dann die zuletzt abgespielte akustische Wiedergabe 38 über den zweiten Zeitpunkt 36 hinaus andauern, so sollte der Aufbau des Menüs 6 analog zu der obigen Ausführung erst ab dem dritten Zeitpunkt 40 beginnen.

Gemeinsam mit dem Aufbau des Menüs 6 kann dem Benutzer nach der akustischen Wiedergabe 38 eine weitere akustische Wiedergabe ausgegeben werden, die ihm beispielsweise das Ergebnis der Datenbankabfrage mitteilt.

Diese akustische Wiedergabe 38 ist vorzugsweise personalisiert für den jeweiligen Benutzer ausgeführt, der die Datenbankabfrage initialisiert. Die Personalisierung kann spezifisch auf einen speziellen Benutzer erfolgen oder auf eine bestimmte Benutzergruppe.

Bei einer Zuordnung zu einem speziellen Benutzer erkennt die Steuervorrichtung 16 der SetTopBox 5 den Benutzer und spricht ihn dann mit individualisierenden Merkmalen, wie beispielsweise seinem Namen, an. Die den Benutzer individualisierenden Merkmale können ebenfalls im Speicher 18 hinterlegt sein. Die Erkennung des Benutzers kann auf beliebige Weise geschehen, beispielsweise durch vorheriges Einloggen des Benutzers an der Fernbedienung und/oder einer Analyse der Sprachdaten.

Alternativ oder zusätzlich kann der Benutzer auch einer bestimmten Benutzergruppe zugeordnet werden. Auch hierzu können beispielsweise die Sprachdaten 14 herangezogen werden. Aus den Sprachdaten 14 lässt sich beispielsweise ein Gemütszustand des Benutzers ermitteln, der ihn dann einer bestimmten Benutzergruppe, wie fröhlich, ungeduldig oder dergleichen, zuordnet.

Grundsätzlich kann die Erkennung des Benutzers aber auch über weitere Sensoren, wie beispielsweise einem Fingerabdruckscanner, erfolgen.

## Patentansprüche

1. Verfahren zum Steuern eines Multimediagerätes während eines Menüaufbaus, der durch einen Benutzer basierend auf einer Datenbankabfrage mit einer Fernbedienung zur Steuerung des Multimediageräts inittiert wird, umfassend:
- Erfassen der Datenbankabfrage durch eine Eingabe des Benutzers auf der Fernbedienung;
- Absenden der Datenbankanfrage an eine Datenbank;
- Empfangen einer Antwort auf die Datenbankanfrage von der Datenbank nach einer Verarbeitungszeit;
- Abspielen einer akustischen Wiedergabe auf dem Multimediagerät während der Verarbeitungszeit, und
- Aufbauen des Menüs basierend auf der Antwort auf die Datenbankanfrage.

2. Verfahren nach Anspruch 1, umfassend:
- Aufbauen des Menüs, nachdem die akustische Wiedergabe beendet ist.

3. Verfahren nach Anspruch 1 oder 2, wobei ein den Benutzer identifizierendes Merkmal bestimmt wird, und die akustische Wiedergabe von diesem den Benutzer identifizierenden Merkmal abhängig ist.

4. Verfahren nach Anspruch 3, wobei die Datenbankabfrage vom Benutzer einen per Sprache erteilten Befehl umfasst, der mittels Spracherkennung erkannt wird.

5. Verfahren nach Anspruch 4, wobei das den Benutzer identifizierende Merkmal basierend auf der Sprache des Benutzers bestimmt wird, mit der der Benutzer den Befehl erteilt.

6. Verfahren nach einem der Ansprüche 3 bis 5, wobei das den Benutzer identifizierende Merkmal basierend auf dem Signal eines Sensor bestimmt wird.

7. Verfahren nach einem der Ansprüche 3 bis 6, wobei eine Kennung des Benutzers nach der Bestimmung des ihn identifzierenden Merkmals in einem Speicher hinterlegt wird.

8. Steuervorrichtung, die eingerichtet ist, ein Verfahren nach einem der vorstehenden Ansprüche durchzuführen.

9. Multimediasystem, umfassend:
- eine Fernbedienung mit einer Eingabeschnittstelle zur Eingabe eines Steuerbefehls per Sprache und einer Übertragungsschnittstelle zum Versenden des eingegebenen Steuerbefehls,
- ein Multimediagerät mit einer Empfangsschnittstelle zum Empfangen des versendeten Steuerbefehls, und
- eine Steuervorrichtung nach Anspruch 8 zum Steuern des Multimediagerätes.

10. Computerprogramm umfassend Programmcodemittel, um alle Schritte eines Verfahrens nach einem der Ansprüche 1 bis 7 durchzuführen, wenn das Computerprogramm auf der Steuervorrichtung nach Anspruch 8 ausgeführt wird.
